# EUROPEAN PATENT APPLICATION

(11) **EP 1 947 804 A1**
(43) Date of publication of application: **23.07.2008**
(21) Application number: 07001339.6
(22) Date of filing: 22.01.2007
(51) Int. Cl.: H04L 12/24

(54) **A method and a server for identifying a network node**

(71) Applicant: Nokia Siemens Networks GmbH & Co. KG, 81541 München (DE)
(72) Inventor: Sanneck, Henning, Dr., 81669 München (DE); Schmelz, Lars, Christoph, 85540 Haar (DE)

(57) **Abstract**

A method for identifying a network node (1), wherein said network node (1) is identified by a server (3) when identifiers of a hierarchical identifier set transmitted by said network node (1) to said server (3) are successfully matched by said server (3) with identifiers of a network node data set stored in an identifier data base (4).

## Description

The invention relates to a method and a server for identifying a network node for inventory and configuration management.

For performing an inventory management or a configuration management in a communication network, it is necessary to associate appropriate configuration data and software, in particular, with network nodes. With conventional inventory and configuration tools, specific hardware instances are usually preplanned to perform a specific network function at a specific location. This, however, limits the flexibility of the planning and the roll-out process of the network. Changes within the network require modifications of the planning incurring a lot of overhead and costs for the node manufacturer and the network operator. For instance, it can happen that a hardware being different from the planned hardware should be delivered to a certain location so that the original planning needs to be changed and the change needs to be communicated from the node manufacturer to the network operator. Furthermore, it is possible that configuration data has to be changed after manufacturing of the network node but before the network node is actually installed in the network.

It has been proposed to employ geo-location to look-up network node in a configuration planning data base. In such a configuration system, the geo-location of a network node is determined when the network node is installed. Then, the location of the network node is conveyed to the configuration server. At the configuration server, the location of the network node as determined by said network node is compared against data of preplanned network nodes generated in a planning phase. If a match is found by the configuration server, the network node which has transmitted its location to the configuration server is identified by the configuration server to be the respective planned network node and the configuration server performs further steps such as uploading data from the identified network node or downloading data to the identified network node. Although this simplifies the network planning and roll-out process due to the decoupling of manufacturer and operator processes, this conventional method has some drawbacks.

With the conventional configuration system, the relocation, i. e. the coordinates of the physical to be configured network node are compared with coordinates of a planned network node stored in a data base within a data set which includes an identification for the network node such as a node-ID. If the coordinates x, y, z of the physical network node and the planned network node match with each other, the stored node-ID of the planned network node is assigned to the physical network node along with configuration data for this network node. During a boot procedure of the network node, the configuration server automatically transmits the planned configuration data to the identified physical node in an auto-configuration process. However, it can happen that the coordinates of the physical node, i. e. the latitude x, the longitude y and the altitude z of a network node are unavailable or are uncertain. The comparison procedure performed by the configuration server on the basis of the geographical location data supplied by the physical node has inherently some uncertainty ΔD because the actual location of the network node will unlikely match exactly with the planned location. In case that the network nodes are physically distant, i. e. if the distance D between two different physical network nodes is much higher than the uncertainty
Δ D (D >> ΔD), this uncertainty does not matter. However, if two physical network nodes are in close proximity to each other (D ≈ ΔD), a match between the close physical network nodes and the corresponding planned network nodes based on the geo-location of the physical network nodes becomes difficult or impossible. In a typical scenario, such a close proximity is given when two physical network nodes are mounted in the same rack so that the latitude x and the longitude y of both network nodes is identical and the altitude z between the two physical network nodes which are mounted in the same rack deviates only to a very small extent (Δx = 0, Δy = 0, Δz ≈ 0). In such a case, it is hardly possible to distinguish between physical nodes mounted in the same rack.

Another disadvantage of the conventional configuration management employing geo-location for look-up of network nodes resides in that may be the case for some or for all network nodes that no network planning data containing location data does exist at all. In many applications, the location of the network node is determined during installation and then the configuration server is notified that a new network node exists at that location.
Another related case is that the network planning data refers to a certain range of acceptable actual locations. For example, a network operator may be required to deploy a dedicated network node only within borders of a certain country such as Germany due to regulatory constraints.

Accordingly, it is an object of the present invention to provide a method and a server for identifying a network node overcoming the above mentioned drawbacks.

An aspect of the method according to the present invention is to provide a method for identifying a network node and allowing safe identification of a network node, even when no or ambiguous network planning data containing location data exists.

A further aspect of the method according to the present invention is to provide a method for identifying a network node, even when the matching geographical location data inherently comprises some uncertainty ΔD.

These objects are achieved by a method comprising the features of main claim 1.

The invention provides a method for identifying a network node,
wherein said network node is identified by a server when identifiers of a hierarchical identifier set transmitted by said network node to said server are successfully matched by said server with identifiers of a network node data set stored in an identifier data base.

In one embodiment of the method according to the present invention, the server is formed by a configuration server connected to the identifier data base which stores data sets of planned network nodes.

In one embodiment of the method according to the present invention, the hierarchical identifier set of a network node is conveyed to said server in a request message.

In one embodiment of the method according to the present invention, the hierarchical identifier set comprises identifiers of different hierarchical identifier levels.

In one embodiment of the method according to the present invention, the hierarchical identifier set comprises as identifiers
a geographical location identifier of the network node,
a node function identifier indicating a function of said network node,
a node type identifier indicating a type of said network node,
a node hardware identifier indicating a hardware instance of said network node, and
a node system hardware identifier indicating a hardware instance of a subsystem within said network node.

In one embodiment of the method according to the present invention, the geographical location identifier comprises a latitude (x), a longitude (y) and an altitude (z) as coordinates of the network nodes.

In one embodiment of the method according to the present invention, the server transmits configuration data to the identified network node.

In one embodiment of the method according to the present invention, the server stores the received hierarchical identifier set transmitted by the identified network node in an inventory data base.

In one embodiment of the method according to the present invention, each network node data set stored in the identifier data base comprises an action indicator indicating a user-configurable action to be performed by said server when the transmitted hierarchical identifier set of the network node is successfully matched with the identifiers of this network node data set.

In one embodiment of the method according to the present invention, the action indicator indicates as actions to be performed by the server
that the server assigns and transmits configuration data to the identified network node,
that the server denies an assignment of configuration data to the identified network node,
that the server stores the hierarchical identifier set of the identified network node in an inventory data base.

In one embodiment of the method according to the present invention, the server decides that an identifier of the transmitted hierarchical identifier set is matched successfully with a corresponding identifier of the same identifier level stored in a network node data set of the identifier data base depending on a type of the respective identifier when both identifiers match exactly with each other or when both identifiers match with each other within a predetermined tolerance range.

In one embodiment of the method according to the present invention, said network node is formed by a base station of a wireless access network.

The invention further provides a server for identifying a network node, wherein said network node is identified by said server when identifiers of a hierarchical identifier set transmitted by said network node to said server are successfully matched by said server with identifiers of a network node data set stored in an identifier data base.

In an embodiment of the server according to the present invention,
the server is a configuration server which transmits configuration data to the identified network node.

In the following, preferred embodiments of the method and the server according to the present invention are described with reference to the enclosed figures.
Figure 1 shows a diagram of a network architecture for illustrating a method for identifying network nodes according to an embodiment of the present invention;
figure 2 shows a table of a hierarchical identifier set as employed in one embodiment of the method according to the present invention;
figure 3 shows a flowchart of an embodiment of the method according to the present invention;
figure 4A shows an example of a hierarchical node identifier and planning data stored in an identified data base for illustrating an embodiment of the method according to the present invention;
figure 4B shows a diagram of the location of different network nodes for the table shown in figure 4A;
figure 5 shows a further example for a hierarchical node identifier data set and planning data stored in an identifier data base illustrating an embodiment of the method according to the present invention.

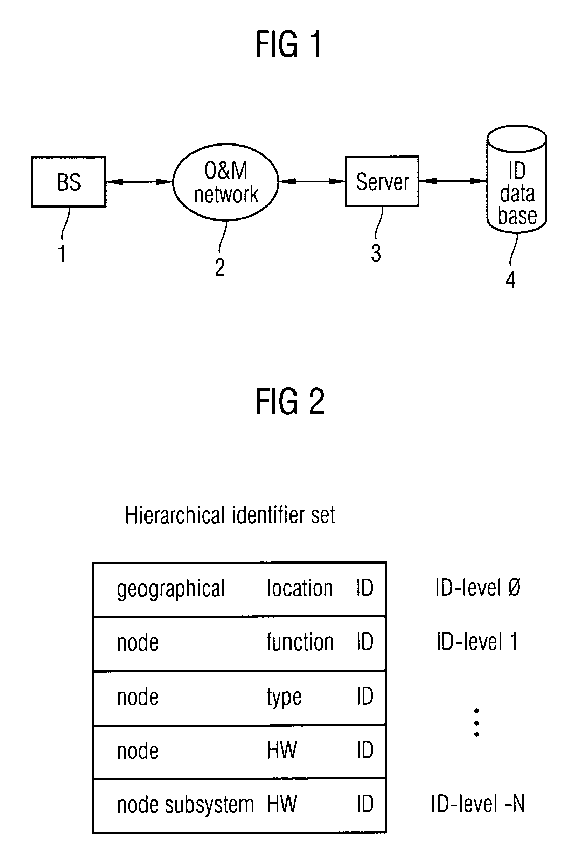

As can be seen from figure 1, a network node 1 which is formed, for example, by a base station BS of a wireless access network is connected via an operation and maintenance network 2 to a server 3 having an identifier data base 4. For identifying the network node 1, this network node 1 transmits a hierarchical identifier set contained in a message via the operation and maintenance network 2 to the server 3 which compares the received identifiers of the hierarchical identifier set with corresponding identifiers of network node data sets stored in the identifier data base 4. The hierarchical identifier set transmitted by the base station 1 to the server 3 is conveyed in a possible embodiment to the server 3 in a request message and comprises identifiers of different hierarchical identifier levels.

Figure 2 shows an example of an hierarchical identifier set which is employed by the method in one embodiment of the present invention. In the given example, the hierarchical identifier set comprises a geographical location identifier of the network node 1, a node function identifier indicating a function of the network node 1, a node type identifier indicating a type of the network node 1, a node hardware identifier indicating a hardware of the network node 1 and a node subsystem hardware identifier indicating hardware of a subsystem within the network node 1. In the given example, the hierarchical identifier set comprises identifiers of five different hierarchical identifier levels 0 to N. The highest hierarchical identification level is formed by the geographical location-ID whereas the lowest identifier level is formed by the node subsystem hardware-ID as shown in figure 2.

The geographical location identifier comprises coordinates of the location of the physical network node 1, wherein the coordinates can be derived by the network node 1 itself using a positioning device such as a GPS-receiver.

In an alternative embodiment, the coordinates or location of the network node 1 can be derived indirectly by the server 3 evaluating a device-ID of a device connected to the network node 1 and by looking up the corresponding geographical location, i. e. the coordinates of the connected device from another data base provided, for instance, by a mobile phone operator. For indirect derivation of the geographic location data of the network node 1, an installer connects, for example, his mobile phone to the network node 1 and instructs the network node 1 to transmit a request message to the server 3 via the network 2 to download the coordinates of the connected mobile phone from the mobile phone network operator. The coordinates of the connected mobile phone and the coordinates of the network node 1, for example the base station 1 as shown in figure 1, are identical. In a preferred embodiment, the network node 1 transmits a complete hierarchical set of identifiers as shown in figure 2.

The node function-ID of the hierarchical identifier set indicates a function of the network node 1. For instance, the node function-ID is a 3G-macro node base station with a certain cell, a predetermined frequency, a predetermined sector configuration and interconnection to a fixed network. Further, the node function-ID can indicate an IP-router with a specific port configuration and port number for interconnection to other routers. The node function-ID is a vendor independent identifier but is a typically operator-specific identifier containing some network topology information data.

When the network node is formed by a base station, it comprises in an embodiment as a function identifier a frequency, a cell size, a cell form and configuration data of an antenna connected to the base station including a direction covered by the antenna.

If the network node 1 is formed by a router, the node function-ID comprises in an embodiment the number of ports of the router and configuration data of the respective ports such as allowable data rates.

The node type identifier indicates the type of the network node 1. The node type identifier is in one embodiment a specific identifier of a certain type of hardware such as Siemens 3G-macro node NB-880 or a Cisco 7000-series router. The node type identifier contains in one embodiment a type specific information data on the node configuration data base version and/or of a software release version.

The node hardware identifier indicates the hardware of a network node 1. For example, the node hardware-ID indicates a specific distance of the respective node type, e. g. a core controller-ID for a Siemens node B NB-880 or a serial number of a Cisco 7000-series router.

The node subsystem hardware identifier indicates a hardware of a subsystem provided within the network node 1. The node hardware identifier comprises in one embodiment a set of identifiers for all subsystems within the specific network node hardware such as MAC-addresses of the individual line cards within a Cisco router.

Until the network node 1 is installed in the network, all identifiers or at least a part of the identifiers of the hierarchical identifier set of said network node 1 is filled with data either automatically by positioning the network node in the field and reading out an internal memory of the network node 1 or manually by install personal entering data into the network node 1. Then, the network node 1 transmits in an installation procedure the hierarchical identifier set as shown in figure 2 in a request message via the operation and maintenance network 2 to the server 3 which receives the request message and evaluates the hierarchical identifier set contained within the request message. The server 3 compares the hierarchical identifier set as shown in figure 2 with the network node data sets stored in the identified data base 4 as shown in figure 1.

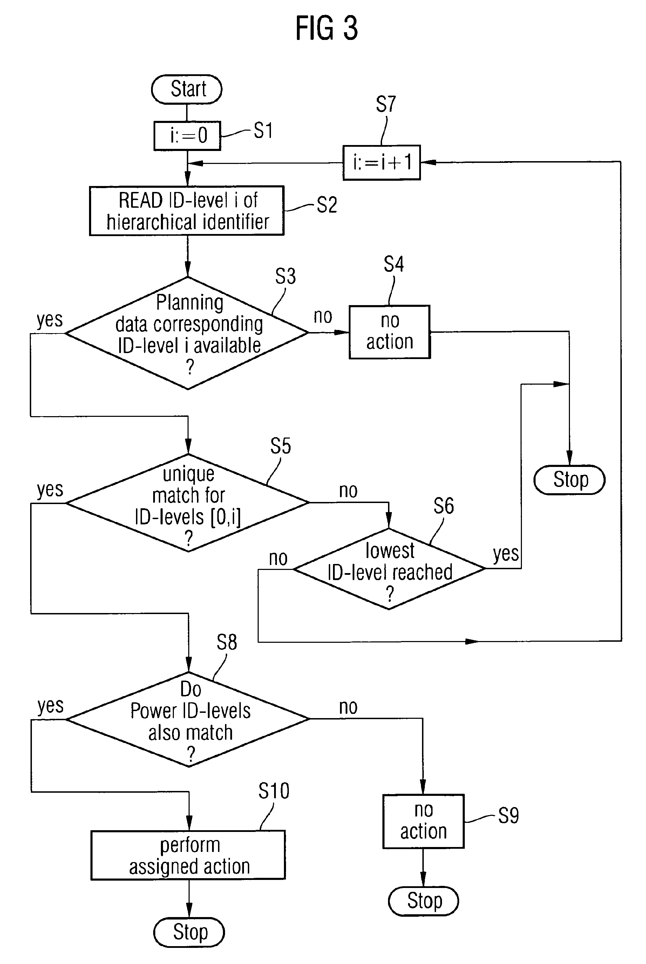

Figure 3 shows a flowchart of an embodiment of the method for identifying a network node.

The procedure as shown in figure 3 is performed by the server 3 after the server 3 has received the request message from the network node 1 containing a hierarchical identifier set as shown in figure 2.

In a first step S1, a counter i is initialized to be zero.

In a further step S2, the server 3 reads the identifier of the ID-level i of the received hierarchical identifier set.

In a step S3, the server 3 decides whether planning data corresponding to the identifier of the actual identifier level is available or not. If no planning data exists to match the received data, the sever performs no action in step S4 and the procedure stops. If planning data is available, the server 3 decides in step S5, whether it has found a unique match for all ID-levels 0 to i compared so far.

If the server 3 has not yet identified a unique match, he checks in step S6 whether the lowest ID-level of the hierarchical identifier set has been reached or not. The lowest ID-level is in a preferred embodiment adjustable by the operator. If the lowest ID-level is reached, the procedure stops. If the server 3 has not reached the lowest ID-level of the hierarchical identifier set as shown in figure 2, the procedure returns to step S2 wherein the iteration counter i is incremented in step S7. When the server 3 has identified a unique match of the network node 1 within the identifier data base 4, the server 3 checks also in step S8 whether the identifiers of the lower ID-levels within the found data set do match with the requirements indicated in the hierarchical identifier set received by the server 3. If this is not the case, the server 3 performs no action in step S9 and the procedure stops. If the lower identifiers within the hierarchical identifier set do also match with the corresponding identifiers of the found unique data set, the server 3 performs in step S10 the assigned action stored in the found data set and the procedure stops.

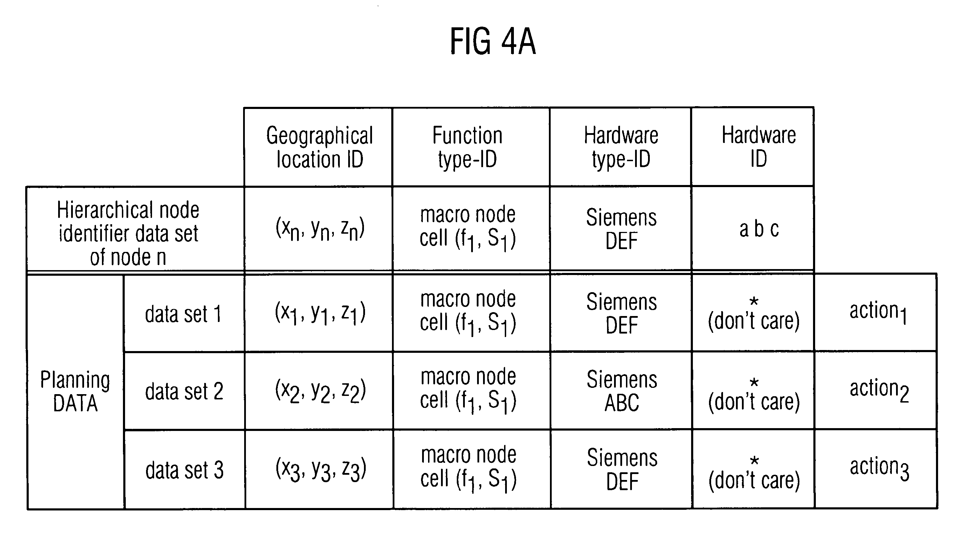

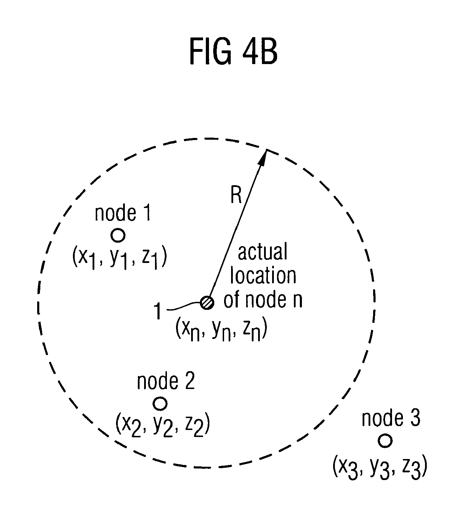

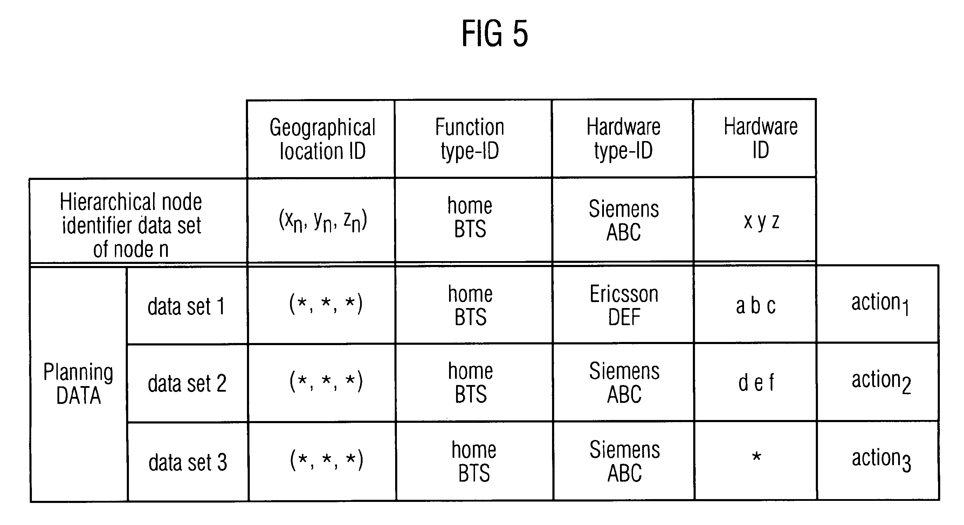

In the following, the method according to the present invention as illustrated in figure 3 is explained in more detail with reference to the examples of figure 4 and figure 5.

In the example of figure 4, a network node 1 having the coordinates x_{N}, y_{N}, z_{N} transmits a hierarchical node identifier data set indicating that the physical network node 1 is a macro node for a cell having a frequency f1 in a sector S1. Further, the hardware of the network node 1 is a Siemens DEF having a hardware-ID abc. The hierarchical node identifier data set as shown in figure 4A is transmitted by the network node 1 to the server 3 as shown in figure 1 which compares the received hierarchical node identifier data set with planning data in the identifier data base 4 comprising three different data sets for planned network nodes, e. g. data set 1, data set 2 and data set 3, as shown in the table of figure 4A. The first data set 1 indicates that the network node with the coordinates x1, y1, z1 is a macro node with a cell having a frequency f1 in the sector S1. The planned network node is planned to be a Siemens DEF network node wherein the hardware-ID of this network node does not matter indicated by a wild card (*) in the data set 1. Further, the planning data stores an action to be taken by the server 3 in case that a network node 1 is found matching the identifiers stored in the data set 1. In a similar manner, the other two data sets 1, 2 indicate features of the other planned network nodes 2, 3.

For performing the method as shown in figure 3, in a first iteration, the server 3 finds that two data sets, i. e. data set 1 and data set 2, match the location x_{N}, y_{N}, z_{N} of the network node 1, since both stored locations lie within a range R of the actual location of the installed network node 1 as shown in figure 4B. As can be seen from figure 4B, the location of the third network node indicated in the data set 3 is outside the allowable range R. Since the server 3 finds two matching data sets 1 and 2 it decides in step S5 as shown in figure 3, that no unique match, i. e. single match has been found and proceeds with step S6. Since the geographical location-ID does not form the lowest ID-level of the hierarchical identified set, the server 3 evaluates as the next ID-level the function type of the hierarchical identifier set. The function type indicates that the installed network node 1 is a macro node. The server 3 compares the function type of the previously found two data sets, i. e. data set 1 and data set 2, found in the previous iteration and finds that data set 1 again matches the received hierarchical node identifier data set. The server 3 finds that the function type identifier of the other data set 2 does not match with the function type of the hierarchical node identifier data set. Accordingly, the server 3 identifies the data set 1 to be unique as the only match with the hierarchical node identifier data set and verifies in step S8 whether also the remaining lower identifier, i. e. the hardware type of the hardware-ID as shown in figure 4A of the data set 1 do also match with the corresponding identifiers of the hierarchical node identifier data set. If in the given example of figure 4A, the hardware type of the data set 1 and the hierarchical node identifier data set does also match and since the hardware-ID is indicated in the planning data as of no importance by the wild card (*), the server 3 can verify that the identifiers of the lower ID-levels do also match with the corresponding identifiers of the hierarchical node identifier data set supplied by the installed network node 1. As soon as the server 3 decides that the verification is successful in step S8, it performs the assigned action indicated in the found data set. In the example of figure 4A, the server 3 performs action 1 which can be, for example, a transmission of configuration data to the identified network node 1.

Figure 5 shows a further example illustrating the method according to the present invention. In this example, the planning data indicates that the geographical location of the network node 1 is not important by storing wild cards (*) as geographical coordinates. Accordingly, any location of a placed network node 1 is allowed as long as further identifier criteria are met. In the given example of figure 5, the geographical node identifier data set is transmitted by the network node 1 that indicates that the installed network node 1 has a geographical location x_{N}, y_{N}, z_{N} and that the network node 1 is the home BTS, i. e. base station. The hardware type of the network node 1 is a Siemens ABC having a hardware-ID xyz. The planning data comprises data sets for three planned network nodes wherein the first planned network node is a home BTS having as a hardware type-ID Ericsson DEF and a hardware-ID abc. The second planned network node is also a home BTS and its hardware type-ID is Siemens ABC and its hardware-ID def. The third planned network node is a home BTS having its hardware type-ID Siemens ABC wherein the hardware-ID does not matter as indicated by the corresponding wild card (*).

In the given example of figure 5 by performing the method as shown in figure 3, the first iteration has found that all data sets, i. e. data set 1, data set 2 and data set 3, do match because they consist of wild cards. In the next iteration, the server 3 finds that also all data sets 1, 2, 3 match with the function type-ID of the installed network node 1 since the identifier indicates the planned network nodes to be home BTS like the installed network node 1. In the next iteration loop, the server 3 can exclude data set 1 since the hardware type-ID of data set 1, i. e. Ericsson DEF, does not match with the hardware type-ID of the installed network node 1, i. e. Siemens ABC. Accordingly, the hierarchical search is then restricted by the server 3 to data sets 2, 3. In the next iteration, the server 3 compares the hardware-ID of the installed network node 1, i. e. xyz, with the hardware-IDs as indicated in data sets 2, 3, e. g. def in data set 2 and the wild card (*) stored in data set 3. Accordingly, server 3 finds a match for data set 3 having the wild card. In the example of figure 5, the server 3 then performs action 3 as stored in the matching data set 3. The action is, for instance, the transmission of configuration data to the identified network node 1. In another embodiment, action 3 may consist of storing the found hierarchical node identifier data set of the identified network node 1 in an inventory data base connected to the server 3.

As can be seen from the examples in figures 4, 5 the network operator has full control over the configuration of the network node 1 to be installed. This is even possible when the exact location of the network node 1 is not given.

In the method according to the present invention, at the configuration server 3, received identification data is matched against planning data stored in the identifier data base 4. Due to the identifier hierarchy, each physical network node can be matched with a planned network node. In the special case where a certain geographical location contains several network nodes with identical hardware, i. e. an identical geographical location-ID, identical node function-ID and an identical node type-ID it is not important which configuration is associated with the respective physical network node 1 (given that the planning data does not contain lower level IDs like the hardware identifier). The final allocation between the planned network node and the physical network node 1 is performed by the server 3 by associating the geographical location-ID, node function-ID, node type-ID with the actual node hardware-ID and if applicable the node subsystem hardware-ID. In a possible embodiment, all transferred data is stored by the configuration server 3. Dependent on the node geographical location-ID, the node function-ID and the node type-ID of the correct configuration data and software is transmitted by the server 3 to the identified network node 1. Furthermore, the server 3 can enforce desired policies. The hierarchical identifier allows to convey decisions during the physical network roll-out like decisions which type of node is used, which instance of node type is used and where, i. e. at which location, the specific network node is deployed, and how, i. e. for which function, a specific network node is used. The configuration server 3 forms a centralized entity than which can record the data referring to these decisions and can add the data to the stored network configuration data. Furthermore, the configuration server 3 matches the decisions against the originally planned data or network operator policies.

The method according to the present invention avoids to take decisions at an early point in time, thus, decoupling the planning point in time from the roll-out point in time. Furthermore, the method according to the present invention allows a higher flexibility during a roll-out and installation of the network nodes 1, thus, reducing costs. The method according to the present invention is effective since only data which already exists in the network planning process is reused.

The method according to the present invention, gives the network operator complete control over decisions which in conventional systems have been made by operating people or installers not belonging to the operator personnel. The method according to the present invention therefore allows employment of less trained personnel which does not need to be familiar with all details of the roll-out process and thereby reducing all costs.

Furthermore, the method according to the present invention assures a correct and error free roll-out process for new types of network infrastructure with network nodes 1 being deployed in large quantities wherein a conventional network node roll-out process cannot be applied. Similarly to the identification data conveyed to the installer, in a conventional network physical roll-out process, a hierarchical identifier according to the present invention allows the configuration server 3 to determine the correct data and to perform further actions associated in the identified network node 1. Consequently, the method according to the present invention allows automation because the method maps the decisions from the domain of human interaction to a domain of machine to machine communication.

The following examples illustrate possible applications of the method according to the present invention.

In a first example, two base stations BS of identical type, similar hard- and software with an identical cell configuration are deployed to an identical location to be connected with two different antennas A and B.
Therefore, in the network roll-out process it does not matter which individual network nodes, i. e. which node hardware-ID, are delivered as long as the node type-ID is correct.

When the nodes are installed, the location identifier (node geographical location-ID) is generated, for example, by a positioning device. When the installer finally interconnects anyone of the two nodes to the antenna A, it means that the installer generates the (only) reference rating part of the functional identifier (node function-ID), because in the given example, other parts of said function-ID, such as the cell configuration are identical. In the given example, this differentiating information is entered into the network node either manually by the installer or by an auto-configuration procedure between the base station BS and the antenna when the cable is plugged in. Then, by performing the above described communication, the configuration server 3 and the base station BS as the network node 1 to be installed can be correctly identified as being connected to the antenna A.

During the deployment of commodity equipment, even the identifier node type-ID may not be important for the planning process. Consequently, the network operator, after finishing the planning process, can buy the commodity equipment just in time when the roll-out starts from the cheapest vendor.

In a further example, the network node roll-out is performed by a network user. In the NGMN (Next Generation Mobile Networks) operator community, the concept of a home zone base station is used. A home zone base station HZBS is a customer premises equipment (CPE). Therefore, the actual location of such a home zone base station HZBS as a network node 1 cannot be planned in advance. Furthermore, such home zone base stations HZBS are deployed in significant quantities wherein often two home zone base stations in close physical proximity to each other. As an example, when a customer buys or rents a home zone base station HZBS, the customer registers his home address with the network operator. The customer gets the home zone base station HZBS of which the network operator then associates the identifier data "node hardware-ID" with the approximate "node geographical location-ID" derived from the customer's home address to form the respective identifier. In this example, the identifier "node function-ID" and "node type-ID" are of less importance because, typically, those identifiers are identical for large quantities of home zone base stations.

When, the home zone base station HZBS is installed as a network node 1, it sends a request message to the server 3 as described above and the network operator checks the "partially" dynamically derived identifiers against its policies. For example, the network operator can deny operations of a network node 1 if the location of the network 1 is not within which the borders of the countries within the network node 1 is sold. Furthermore, undesired operational modes of the network nodes 1 are detected by the network operator. For example, an exchange of the delivered specific network node hardware with a different hardware, a network node 1 with manipulations of software and hardware, an interconnection of the network node 1 to another access network is detected by the operator by checking the corresponding identifiers.

In a further example for a possible application of the method according to the present invention, the network node roll-out can be performed by a third party. For deployment of pico-node base stations, in particular, in indoor environments the network operator can contract other companies to involve, for example, facility management personnel for a certain site. That means, that the network operator in this example does not have control over the exact location of the network node 1. Additionally, for example, due to indoor radio conditions, these base stations are deployed in large quantities where often two base stations are in close physical proximity to each other. In this example, similarly to the home zone base station case, the network operator registers the site address and then transfers the base station as a network node 1 to the contracted company, for example, the network operator sends the base station using a parcel service to the site. In this example, because often several identical base stations, i. e. network nodes 1, are sent to the same site or locations and a third party is trusted more than the individual customer, the network operator can use approximate "node geographical location-ID" derived from the site address together with the "node function-ID" which reflects, for example, the (rough) transport network planning for different storeys of a certain building. When, the home zone base station is installed as a network node 1 and communicates with the configuration server 3, the network operator can check the dynamically derived identifiers against the planning data and can thus determine to a certain extent if the deployment is taking place correctly.

## Claims

1. A method for identifying a network node (1),
wherein said network node (1) is identified by a server (3) when identifiers of a hierarchical identifier set transmitted by said network node (1) to said server (3) are successfully matched by said server (3) with identifiers of a network node data set stored in an identifier data base (4).

2. The method according to claim 1,
wherein said server (3) is formed by a configuration server connected to the identifier data base (4) which stores data sets of planned network nodes.

3. The method according to claim 1,
wherein the hierarchical identifier set of a network node is conveyed to said server (3) in a request message.

4. The method according to claim 1,
wherein the hierarchical identifier set comprises identifiers of different hierarchical identifier levels.

5. The method according to claim 4,
wherein the hierarchical identifier set comprises as identifiers:
a geographical location identifier (geo-location-ID) of the network node (1),
a node function identifier (function-ID) indicating a function of said network node (1),
a node type identifier (type-ID) indicating a type of said network node (1),
a node hardware identifier (hardware-ID) indicating a hardware of said network node (1),
a node subsystem hardware identifier (subsystem hardware-ID) indicating a hardware of a subsystem within said network node (1).

6. The method according to claim 5,
wherein the geographical location identifier (geo-location-ID) comprises a latitude (x), a longitude (y) and an altitude (z) as coordinates of the network nodes (1).

7. The method according to claim 1,
wherein the server (3) transmits configuration data to the identified network node (1).

8. The method according to claim 1,
wherein the server (3) stores the received hierarchical identifier set transmitted by the identified network node (1) in an inventory data base.

9. The method according to claim 1,
wherein each network node data set stored in the identifier data base (4) comprises an action indicator indicating an action to be performed by said server (3) when the transmitted hierarchical identifier set of the network node (1) is successfully matched with the identifiers of this network node data set.

10. The method according to claim 9,
wherein the action indicator indicates as actions to be performed
- that the server (3) assigns and transmits configuration data to the identified network node (1),
- that the server (3) denies an assignment of configuration data to the identified network node (1),
- that the server (3) stores the hierarchical identifier set of the identified network node (1) in an inventory data base.

11. The method according to claim 1,
wherein the server (3) decides that an identifier of the transmitted hierarchical identifier set is matched successfully with a corresponding identifier of the same identifier level stored in a network node data set of the identifier data base (4) depending on a type of the respective identifier when both identifiers match exactly with each other or when both identifiers match with each other within a predetermined tolerance range.

12. The method according to claim 1,
wherein said network node 1 is formed by a base station (BS) of a wireless access network.

13. A server (3) for identifying a network node (1),
wherein said network node (1) is identified by said server (3) when identifiers of a hierarchical identifier set transmitted by said network node (1) to said server (3) are successfully matched by said server (3) with identifiers of a network node data set stored in an identifier data base (4).

14. The server according to claim 13,
wherein the server (3) is a configuration server which transmits configuration data to the identified network node (1).
